# EUROPEAN PATENT SPECIFICATION

(11) **EP 3 186 110 B1**
(45) Date of publication and mention of the grant of the patent: **10.10.2018**
(21) Application number: 14766849.5
(22) Date of filing: 29.08.2014
(51) Int. Cl.: B60R 16/02, F16L 3/233

(54) **FASTENER WITH REUSABLE INSERT FASTENING ELEMENT**
BEFESTIGUNGSELEMENT MIT WIEDERVERWENDBAREM EINSATZBEFESTIGUNGSELEMENT
DISPOSITIF DE FIXATION AVEC ÉLÉMENT DE FIXATION À PIÈCE RAPPORTÉE RÉUTILISABLE

(43) Date of publication of application: 05.07.2017
(73) Proprietor: Avery Dennison Retail Information Services, LLC, Mentor, OH 44060 (US)
(72) Inventor: RAYMOND, Jeffrey A., Leominster, MA 01453 (US); GILBERTSON, Daniel, Millbury, MA 01527 (US)
(74) Representative: Müller-Boré & Partner Patentanwälte PartG mbB
(86) International application number: PCT/US2014/053349
(87) International publication number: WO 2016/032507

(56) References cited:
- EP-A1- 0 764 788
- EP-A2- 1 277 975
- WO-A1-2011/007526
- WO-A1-2012/132544
- JP-A- 2011 094 682
- US-A- 4 490 886
- US-A- 5 333 822
- US-A1- 2003 189 140
- US-A1- 2004 265 094
- US-A1- 2007 044 990
- US-A1- 2011 272 547
- US-B2- 8 282 047

## Description

### Field of the Invention

The present invention relates generally to fasteners, such as cable ties and more particularly to cable ties that include a fastener designed for fitted insertion through an opening in a panel.

### Background of the Invention

Fasteners such as cable ties, also commonly known as bundling ties and harnessing devices, are well known devices that are widely used in the art to couple together a plurality of elongated objects, such as a group of parallel wires or cables. One type of fastener which is well known and commonly used in the art, comprises an elongated strap that is secured, at one of its ends, to an apertured head. The free end of the elongated strap is typically shaped to define a tail of narrowed width to facilitate insertion through the apertured head. A plurality of serrations, or teeth, is formed along one surface of the elongated strap along the majority of its length. Additionally, an internal pawl, or locking tang, is disposed within the apertured head and is adapted to sequentially engage the serrations on the strap.

A fastener of the type as described above is commonly used in the following manner to bundle together a plurality of parallel wires. Specifically, with the plurality of wires grouped together, the elongated strap of the fastener is wrapped around the bundle of wires and formed into a closed loop by inserting the free end of the serrated strap through the apertured head. With the fastener formed into a closed loop, the free end of the serrated strap is advanced through the apertured head to cinch the fastener tightly around the bundle, with the internal pawl lockably engaging the serrations of the strap to prevent withdrawal, or backing out, of the strap from the apertured head. In this manner, the engagement of the internal pawl onto the serrated strap secures the cinched cable tie in its closed loop configuration around the wire bundle.

In certain applications, it is desirable to retain a group of wires bundled with a fastener such as a cable tie securely against a flat surface. In particular, in the automotive industry, it is often desirable to retain a group of electrical wires bundled with a cable tie securely against an automotive panel in order to (i) route the bundle away from a region of the vehicle where it may be susceptible to damage (e.g., by extreme heat or sharpened objects), and/or (ii) preclude the bundle from moving (i.e., rattling) within the automotive body during operation of the vehicle.

Accordingly, fasteners such as cable ties are commonly provided with an insert, or push mount, fastener that is designed for fitted insertion through an opening in an automotive panel in order to fixedly secure the bundle to the panel. Insert fasteners are commonly constructed in a variety of different configurations.

One well known style of insert fastener is often referred to in the art as an arrowhead-type fastener due to its arrow-like head configuration. Examples of cable ties with arrowhead-type fasteners are shown in U.S. Patent No. 8,282,047 to J.R. Franks and U.S. Patent No. 5,333,822 to J.C. Benoit, et al.

An arrowhead-type fastener head typically includes a pair of opposing wings, or blades, with the inner end of each blade being fixedly mounted on a support structure, such as a common stem. The free ends of the pair of blades are designed to extend outward in opposing directions and are capable of inward deflection upon receiving a suitable force thereon.

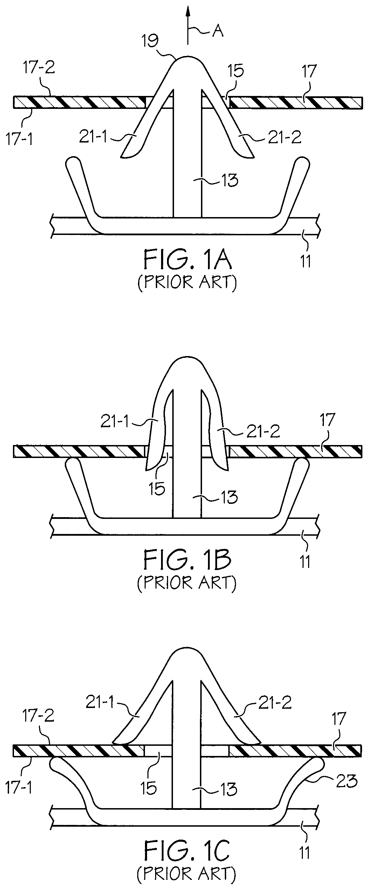

In this manner, a fastener with an arrowhead-type fastener can be secured to a flat surface by simply pushing the fastener head through an opening in the surface. Specifically, referring now to Figs. 1(a)-(c), there is shown a prior art fastener11 with an arrowhead fastener head 13 at various stages of insertion of arrowhead fastener head 13 through an opening 15 in a substantially flat panel 17. As can be seen in Fig. 1(a), tip 19 of fastener head 13 is inserted rearward through opening 15 in the direction from front surface 17-1 of panel towards rear surface 17-2 of panel 17, as represented by arrow A. Due to the deflectable nature of wings 21-1 and 21-2, the rearward force applied onto the fastener head13 causes the portion of panel 17 that immediately defines opening 15 to compress the head13 to the extent necessary to penetrate through opening 15, as shown in Fig. 1(b). Once wings 21-1 and 21-2 penetrate entirely through opening 15, the head13 of the fastener resiliently expands back to its original configuration, as shown in Fig. 1(c). In this manner, wings 21 abut directly against rear surface 17-2 to prevent withdrawal, or backing out, of fastener 13 from panel 17. At the same time, a support member 23 in the form of an expandable basket or one or more arcuate tabs applies a biasing force against front surface 17-1 to firmly retain fastener head 13 in engagement with panel 17.

During the life of a vehicle, it is often necessary to separate a wire bundle, or harness, from an automotive panel (e.g., for maintenance or to access other components). In order to withdraw an arrowhead type fastener from the panel opening and thereby allow for the separation of the wire bundle from the panel, traditional cable ties, such as cable tie 11, require that the operator manually assert an inward compressive force onto the exposed outer surfaces of the deflectable wings of the fastener. While maintaining an inward compressive force on the fastener that is sufficient to disengage the deflectable wings from the panel, the fastener is backed out from the panel opening. Upon completion of the requisite task, the resilient construction of the fastener allows for its reinsertion through the opening in the panel.

However, it is to be understood that the exposed outer surfaces of the deflectable wings of an arrowhead type fastener are often rendered inaccessible to the user. In particular, the user typically has limited access behind an automotive panel as the rear side of the panel is typically enclosed by another portion of the automobile, such as the vehicle body, a layer of fabric or another similar element. Additionally, at least a portion of the cable tie typically covers the opening from the front side of the panel and thereby similarly renders the deflectable wings inaccessible from the front of the panel.

Because the user is provided with no means to access an arrowhead fastener secured to an automotive panel, removal of the fastener from the panel is typically achieved by severing, or otherwise permanently destroying, the fastener. As a result, the user is unable to reuse the fastener which, in turn, renders related aspects of automotive maintenance unnecessarily complicated and expensive.

WO 2011/007526 A1 discloses a band clip that can be easily detached from a vehicle panel. The band clip affixes a wire harness to a vehicle panel in which an engagement hole is formed, comprises: a clip body in which a band insertion hole is formed; a band section with a base end thereof is attached to the clip body and a tip end thereof is inserted into the band insertion hole; a panel engagement part which protrudes from the clip body and which enters the engagement hole; an elastic piece provided on a base material engagement part; a locking claw which protrudes from the elastic piece and engages with the engagement hole; and a pressing protrusion provided on the band section. If the band section, which is inserted into the insertion hole, is moved in the direction of removal from the insertion hole, the pressing protrusion presses on the elastic piece in the direction that releases the engagement between the locking claw and the engagement hole.

JP 2011 094682 A discloses a wire harness holding clip which can be mounted even in a narrow space. The wire harness holding clip consists of a shaft part which is fixed to a wire harness and which can be inserted into a mounting hole from a tip side, a locking part which is provided to the tip side of the shaft part and locked to the peripheral edge on a side opposite to an insertion side of the mounting hole, a frame-like abutting part which comes into contact with an peripheral edge on the insertion side of the mounting hole and a pair of bellows-shaped elastic deforming parts which are extendable/retractable in a direction along the shaft part and are placed holding the mounting hole between a wire holding part and the abutting part so as to face each other.

US 2004/0265094 A1 discloses a two part fastener for clamping together first and second members that have an opening. The two part fastener comprises a base having legs resiliently biased outwardly away from each other and insertable through the opening. A slide is manually slidable relative to the base to control the position of the legs. The slide has a first position relative to the base in which blocking portions of the legs are in a blocking position to block removal of the legs through the opening. In a second position the slide blocks inward movement of the legs thereby blocking removal of the fastener. In a third position the slide holds the legs inward, thereby enabling removal of the fastener.

EP 1 277 975 A2 discloses a two part fastener for clamping together first and second members that have an opening. The fastener comprises a base having a plurality of legs resiliently biased outwardly away from each other and insertable through the opening. A knob connected with the base is manually rotatable relative to the base to control the position of the legs. The knob has a first position of rotation relative to the base in which blocking portions of the legs are in a blocking position to block removal of the legs through the opening. In a second position of rotation the knob blocks inward movement of the blocking portions of the legs from the blocking position, thereby blocking removal of the fastener. In a third position of rotation the knob holds the blocking portions of the legs inward from the blocking position, thereby enabling removal of the fastener.

US 2007/044990 A1 discloses an automotive cable holding system for securing a vehicle body to a cable which is connected at one end to a locking mechanism for a rear seat backrest and at the other end to a releasing mechanism. The automotive cable holding system includes a bracket for holding an end of the cable and an insertion opening in the vehicle body into which the bracket is inserted, wherein the bracket has provided thereon abutment surfaces which abut the inner circumferential surfaces of the insertion opening, an engagement portion extending further outwards than the abutment surfaces at a position lying further inwards than the insertion opening inside the vehicle body and a clip portion disposed on the opposite side to the engagement portion inside the vehicle body.

### Summary of the Invention

It is an object of the present invention to provide a new and improved fastener that can be used to bundle together two or more items.

It is another object of the present invention to provide a fastener as described above that includes a fastener head that is particularly well suited for fitted insertion through an opening in an automotive panel in order to fixedly secure the fastener to the panel.

It is yet another object of the present invention to provide a fastener as described above that is designed to enable the fastener head to be easily removed from the automotive panel and reused, as needed.

It is yet still another object of the present invention to provide a fastener as described above that has a limited has a limited number of parts, is simple to use and is inexpensive to manufacture.

Accordingly, as one feature of the present invention, there is provided a fastener comprising (a) a locking head shaped to include an elongated strap accepting channel, the head comprising a locking tang which is disposed to project into the strap accepting channel, (b) a strap having a first end and a second end, the first end being formed onto the head, the strap being dimensioned for insertion into the strap accepting channel so the cable tie forms a closed loop, the strap being adapted to be engaged by the locking tang when the tie is formed into a closed loop, and (c) an insert fastener formed onto at least one of the head and the strap, the insert fastener comprising, (i) a platform shaped to define a transverse opening, (ii) a support member formed onto the platform, and (iii) a first retention wing pivotally coupled to the support member, wherein at least a portion of the first retention wing extends through the transverse opening in the platform.

As another feature of the present invention, there is provided an insert fastener comprising (a) a platform shaped to define a transverse opening, (b) a support member formed onto the platform, and (c) a first retention wing pivotally coupled to the support member, wherein at least a portion of the first retention wing extends through the transverse opening in the platform.

Various other features and advantages will appear from the description to follow. In the description, reference is made to the accompanying drawings which form a part thereof, and in which is shown by way of illustration, an embodiment for practicing the invention. The embodiment will be described in sufficient detail to enable those skilled in the art to practice the invention, and it is to be understood that other embodiments may be utilized and that structural changes may be made without departing from the scope of the invention. The following detailed description is therefore, not to be taken in a limiting sense, and the scope of the present invention is best defined by the appended claims.

### Brief Description of the Drawings

In the drawings wherein like reference numerals represent like parts:
Figs. 1(a)-(c) are a series of fragmentary, side views of a prior art cable tie with an arrowhead fastener, the cable tie being shown at various stages of insertion of its arrowhead fastener through an opening in a panel, the panel being shown in cross-section;
Fig. 2 is a front view of a cable tie constructed according to the teachings of the present invention;
Fig. 3 is a left side view of the cable tie shown in Fig. 2;
Fig. 4 is a bottom view of the cable tie shown in Fig. 2;
Fig. 5 is an enlarged, fragmentary, bottom view of the cable tie shown in Fig. 2;
Fig. 6 is an enlarged, fragmentary, bottom perspective of the cable tie shown in Fig. 2;
Fig. 7 is an enlarged, fragmentary, left side perspective view of the cable tie shown in Fig. 2;
Fig. 8 is an enlarged, fragmentary, top view of the cable tie shown in Fig. 2;
Fig. 9 is an enlarged, fragmentary, left side perspective view of the cable tie shown in Fig. 2;
Fig. 10 is an enlarged, fragmentary, right side perspective view of the cable tie shown in Fig. 2;
Fig. 11 is an enlarged, fragmentary, end perspective view of the cable tie shown in Fig. 2;
Fig. 12 is an enlarged, fragmentary, left side view of the cable tie shown in Fig. 2;
Fig. 13 is an enlarged, fragmentary, end perspective view of the cable tie shown in Fig. 2, the cable tie being shown secured to a panel;
Fig. 14(a) is an enlarged, fragmentary, front view of the cable tie shown in Fig. 13;
Fig. 14(b) is a fragmentary, section view of the cable tie shown in Fig. 14(a), taken along lines 14(b)-14(b), the cable tie being shown secured to a panel;
Fig. 15(a) is an enlarged, fragmentary, front view of the cable tie shown in Fig. 13; and
Fig. 15(b) is a fragmentary, section view of the cable tie shown in Fig. 15(a), taken along lines 15(b)-15(b), the cable tie being shown secured to a panel.

### Detailed Description of the Invention

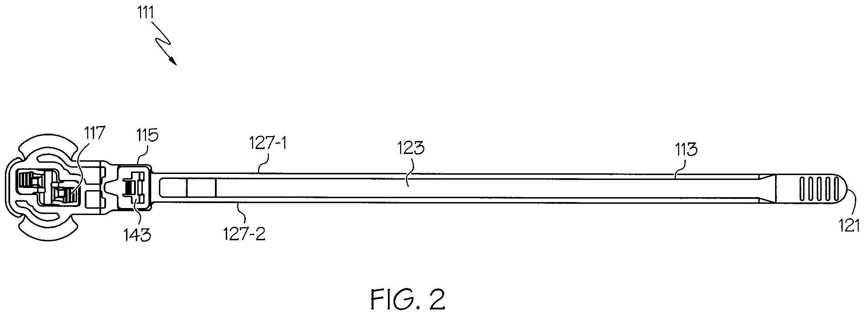

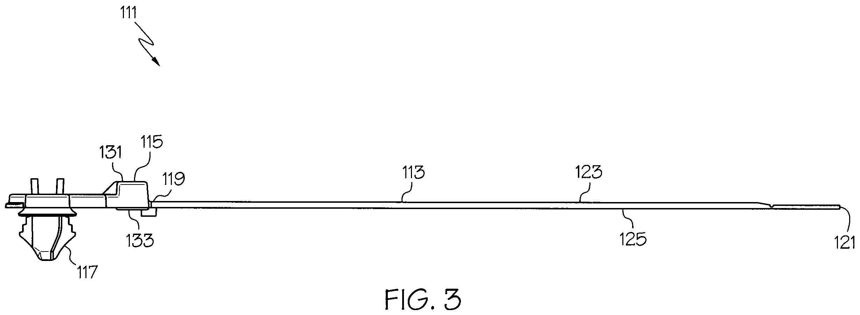

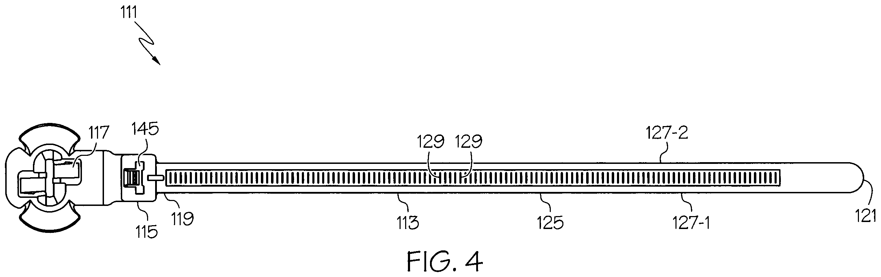

Referring now to Figs. 2-4, there is shown a cable tie constructed according to the teachings of the present invention, the cable tie being identified generally by reference numeral 111. The present invention also acknowledges that the present invention is not limited to a cable tie and contemplates the utilization of any type of fastener. In one embodiment, cable tie 111 can be formed in a closed loop configuration in order to, inter alia, bundle together a plurality of parallel wires. In turn, cable tie 111 can be fixedly secured to an automotive panel or other similar structure. As will be explained further in detail below, cable tie 111 is specifically designed to facilitate intact removal of cable tie 111 from an automotive panel to which it is secured. As a result, cable tie 111 is particularly well suited for reuse, which is a principal feature of the present invention.

Fastener or cable tie 111 is a unitary member that comprises an elongated strap 113, a pawl115 formed onto one end of elongated strap 113, and an aperture head 117 formed onto the pawl115. As will be described in detail below, the particular construction of the aperture head117 facilitates reuse of cable tie 111 and, as such, serves as a principal feature of the present invention.

Preferably, fastener or cable tie 111 or any other type of fastener of the like, is constructed from a durable and inexpensive plastic material, such as nylon, using conventional molding techniques. However, it is to be understood that fastener or cable tie 111 could be manufactured using a wide variety of alternative materials without departing from the spirit of the present invention.

Strap 113 is constructed as an elongated flexible band that has a generally uniform rectangular shape in lateral cross-section along the majority of its length. However, it is to be understood that strap 113 could be constructed in alternative shapes and configurations without departing from the spirit of the present invention.

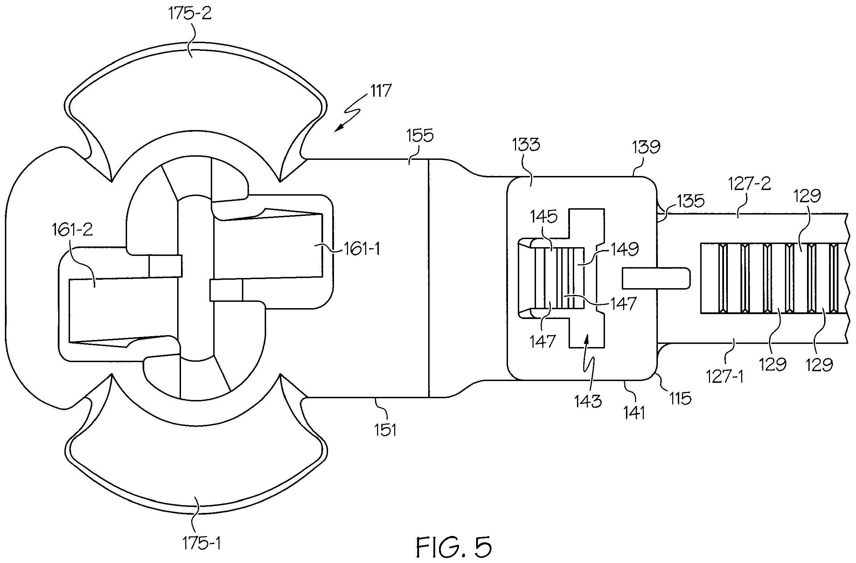

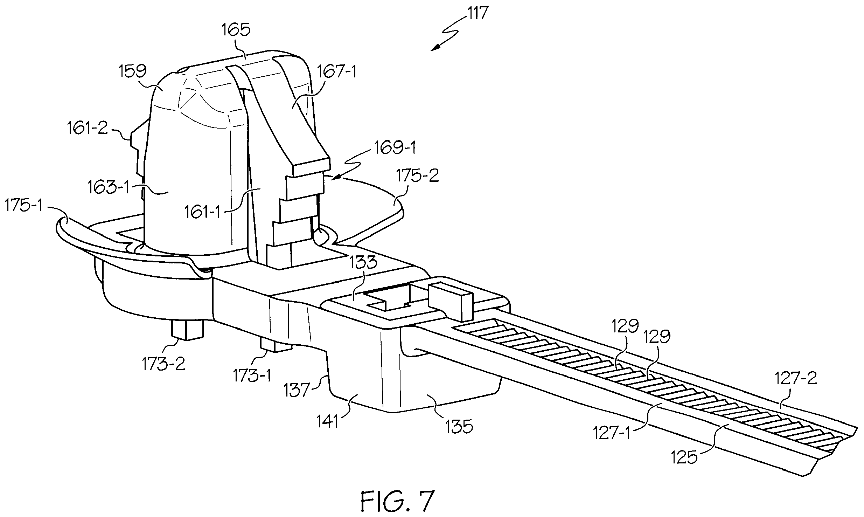

Strap 113 comprises a first end 119, a second end 121, a substantially flat front surface 123, a bottom surface 125 and a pair of opposing, longitudinally extending side members, or rails, 127-1 and 127-2. As seen most clearly in Figs. 5-7, a plurality of ratchet-shaped teeth 129 are integrally formed into bottom surface 125 along the majority of its length, each tooth 129 extending laterally across bottom surface 125 between side members 127-1 and 127-2. As will be explained further below, teeth 129 are designed to be sequentially engaged by pawl 115 when fastener such as a cable tie 111 is formed into a closed loop.

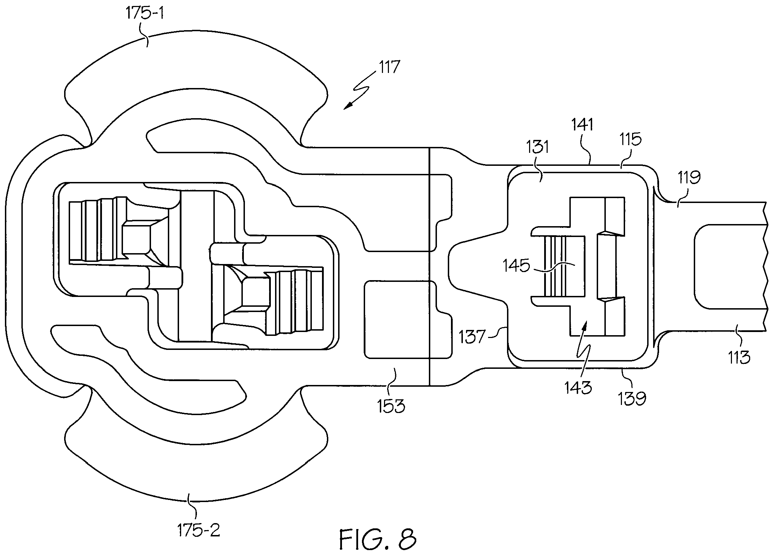

As seen most clearly in Figs. 5-9, pawl115 is constructed as an enlarged, rectangular block, or buckle, that is shaped to include a front wall 131, a rear wall 133, an inner end wall 135, an outer end wall 137, a left sidewall 139, and a right sidewall 141 that together define an elongated strap accepting channel 143 that extends through pawl115 from front wall 131 to rear wall 133.

As can be seen, first end 119 of strap 113 is integrally formed onto the outer surface of inner end wall 135 and extends generally orthogonally out therefrom. Furthermore, elongated channel 143 is generally rectangular in transverse cross-section and is appropriately dimensioned to fittingly receive a section of strap 113 when fastener 111 is formed into a closed loop.

Locking pawl115 additionally comprises a locking mechanism 145 that is pivotally coupled to the inner surface of outer end wall 137 along front wall 131. Locking mechanism 145 of pawl 115 is naturally oriented to project into elongated channel 143 and selectively engage strap 113 when inserted into pawl115, as will be explained further below.

Locking mechanism145 of pawl 115is represented herein as a generally block-shaped member that includes a plurality of ratchet-shaped teeth 147 formed towards its free end 149. As can be appreciated, cable tie 111 is designed such that multiple teeth 147 on locking mechanism145 engage corresponding teeth 129 on strap 113 to maximize the strength of engagement between pawl115 and strap 113 when formed into a closed loop configuration. However, it is to be understood that alternative styles of pawls, such as relatively flat, planar members, could be utilized in place of pawl 115 without departing from the spirit of the present invention.

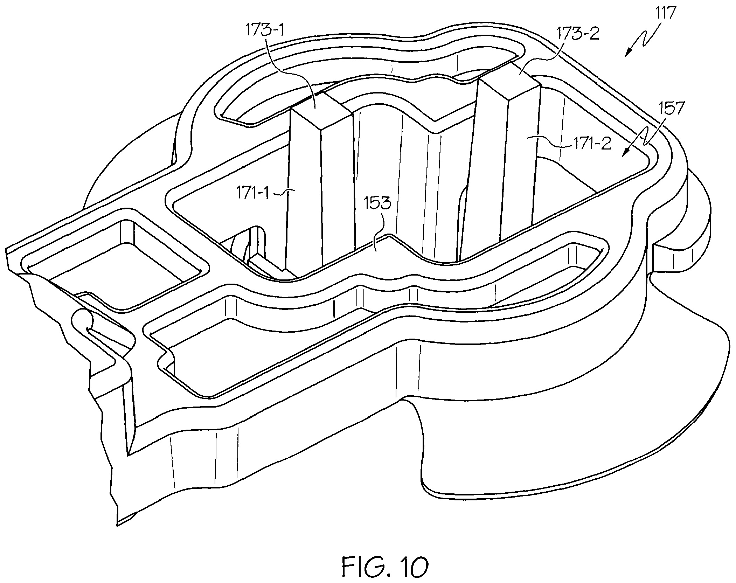

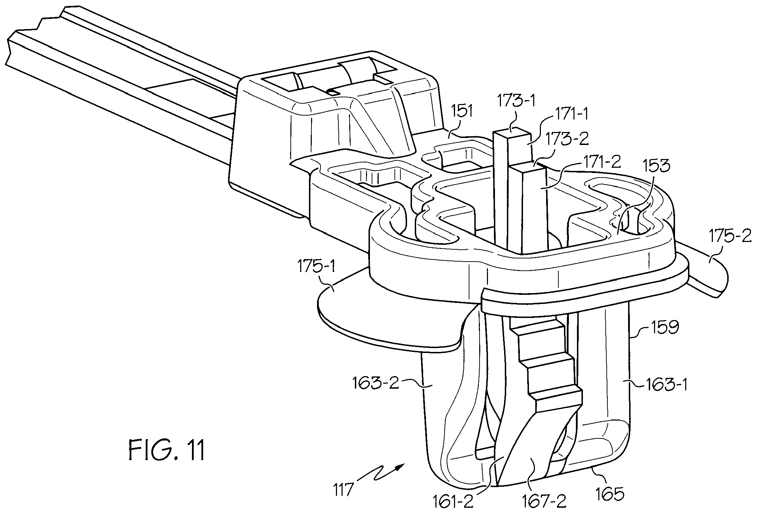

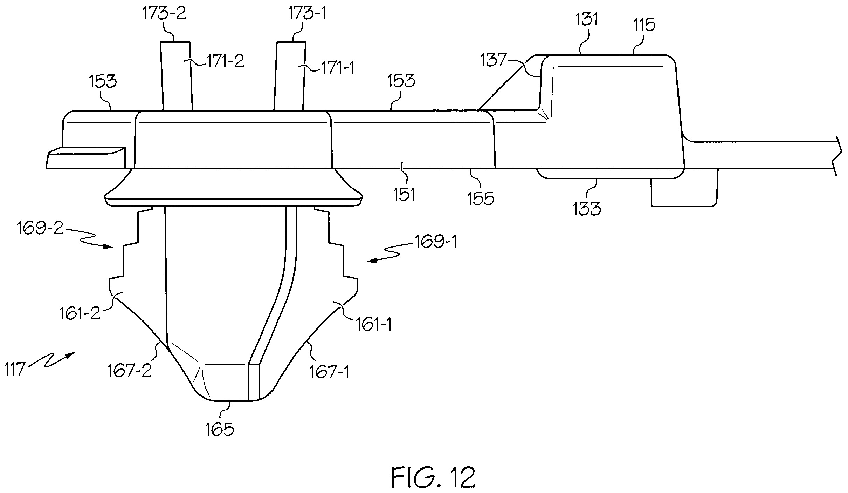

Referring now to Figs. 5-12, aperture head117 is integrally formed onto outer end wall 137 of pawl115. As will be explained in detail below, aperture head117 is designed to be manually inserted into an opening in an automotive panel or other similar flattened surface in order to fixedly secure a wire bundle harnessed by cable tie 111 thereto. Furthermore, as a principal feature of the present invention, aperture head117 is provided with means for releasing the head 117 from an automotive panel to which it is coupled, the releasing means being accessible from either side of the automotive panel.

Aperture head117 comprises a substantially flat platform, or base, 151 that is integrally formed onto outer end wall 137 of pawl115 and extends orthogonally outward therefrom. Platform 151 includes a substantially flat front surface 153, which is recessed slightly beneath front wall 131 of head 115, and a substantially flat rear surface 155, which lies generally flush with rear wall 133 of pawl115. Platform 151 is additionally shaped to define a generally rectangular, central opening 157 that extends therethrough from front surface 153 to rear surface 155. As will be explained further below, the inclusion of opening 157 facilitates the release of the aperture head 117 from either side of a panel to which it is secured.

Aperture head117 additionally includes a support member 159, which is formed onto rear surface 155 of platform 151 over opening 157, and a pair of opposing panel retention wings, or blades, 161-1 and 161-2, which are formed onto support member 159 and are capable of pivotal deflection relative thereto. Together, support member 159 and wings 161 are appropriately dimensioned for fitted insertion through a corresponding opening in an automotive panel, with wings 161 engaging the panel to retain fastener 117 securely thereto, as will be explained further below.

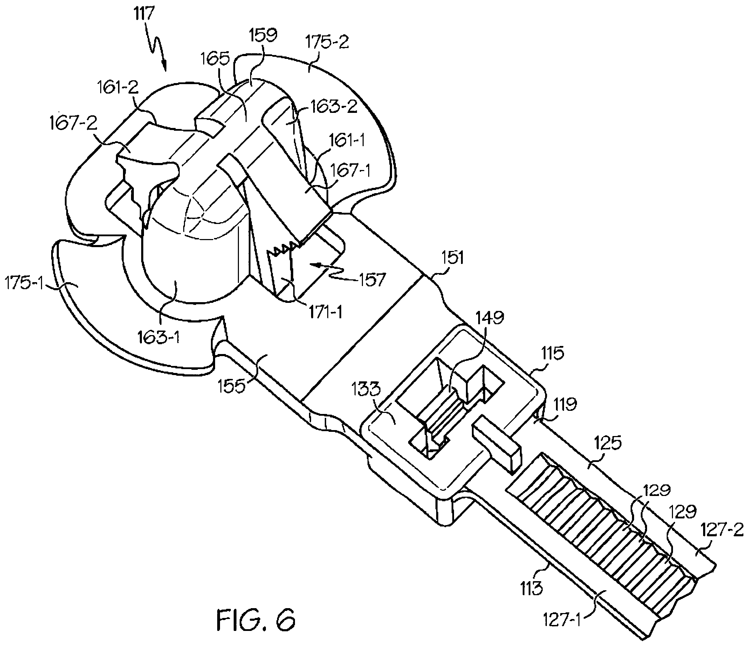

As seen most clearly in Figs. 6, 7 and 11, support member 159 is represented herein as a generally U-shaped, rigid structure that includes a pair of spaced apart, parallel arms 163-1 and 163-2 that are integrally formed onto and extend orthogonally out from rear surface 155 of platform 151 on opposite sides of opening 157. A horizontal cross-member 165 is integrally formed and extends laterally across the free ends of arms 163-1 and 163-2 to provide support member 159 with its U-shaped configuration.

Retention wings 161-1 and 161-2 are hingedly coupled to cross-member 165 and extend outwardly in opposing directions. It is to be understood that each wing 161 is capable of pivoting inward upon receiving a suitable inward compressive force. Upon removal of the inward force, each retention wing 161 is constructed to resiliently pivot back outward and return to its original orientation. In this manner, wings 161 are designed to deflect inward to the extent necessary to penetrate through, and subsequently engage, an automotive panel. Thereafter, if fastener 117 is compressed so as to allow for its release from the panel, the resilient construction of wings 161 enables fastener 117 to return to its original configuration and therefore be available for reuse in similar applications.

As seen most clearly in Figs. 6, 7, 11 and 12, each retention wing 161 is constructed as an enlarged, generally triangular blade that is hingedly coupled at one of its corners to cross-member 165. Wings 161-1 and 161-2 are shaped to include inwardly curved, or concave, back surfaces 167-1 and 167-2, respectively. Each back surface 167 is exposed and appropriately shaped to serve as a finger depression surface on which the user may apply a manual force to inwardly pivot each corresponding wing 161 and thereby collapse the width of fastener 117.

Wings 161-1 and 161-2 are also shaped to include a series of steps, or ratchets, 169-1 and 169-2, respectively. Each set of steps 169 is formed on the outer surface of its corresponding wing 161 and is designed to engage the portion of an automotive panel that immediately defines the opening through which aperture head 117 is inserted, as will be shown further in detail below. As can be appreciated, the use of multiple steps 169 enables wings 161 to be utilized within panel openings of varying dimensions.

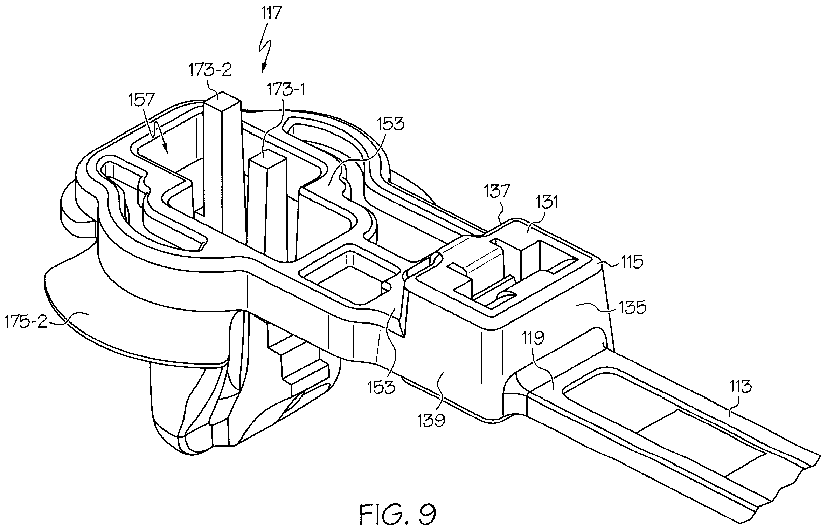

Wings 161-1 and 161-2 are further shaped to include elongated release arms 171-1 and 171-2, respectively. Each release arm 171 is constructed as an elongated, generally rectangular bar that is formed onto the distal end of its corresponding wing 161 and that extends vertically upward therefrom. As seen most clearly in Figs. 9-12, arms 171-1 and 171-2 project upward in a generally parallel relationship and extend entirely through opening 157 in platform 151. In this manner, the free ends 173-1 and 173-2 of arms 171-1 and 171-2, respectively, are positioned above front surface 153 of platform 151 and thereby enable the user to manipulate the orientation of wings 161 from the front of tie 111, which is highly desirable.

It should be noted that wings 161 are laterally offset from one another (i.e., so that the arcuate path through which each wing 161 pivots does not transect the arcuate path of the opposing wing 161). As a result, wings 161 are not only fully accessible for molding purposes in multiple directions but also avoid the risk of interference with each other during routine use.

As seen most clearly in Figs. 5-8, a pair of curved spring tabs 175-1 and 175-2 is integrally formed onto the opposing sides of rear surface 155. Each spring tab 175 extends along an arcuate path and is downwardly curved. As will be explained further below, each spring tab 175 has a resilient construction and is designed to apply a stabilizing retentive force onto the front surface of a panel to which fastener 117 is coupled.

As referenced briefly above, tie 111 is particularly well-suited for use in bundling together a plurality of parallel wires and, in turn, securing the harnessed bundle to an automotive panel. As a principal feature of the present invention, tie 111 is designed with multiple means for accessing, and selectively releasing, aperture head 117 from an automotive panel to which it is coupled. Once released, the resilient construction of tie 111 allows for its subsequent coupling to the same, or an alternative, panel.

For purposes of illustration only, tie 111 is described herein as being used to secure a plurality of parallel wires to an automotive panel. However, it should be noted that tie 111 is not limited to use in coupling a plurality of parallel wires to an automotive panel. Rather, it is to be understood that tie 111 could be (i) wrapped around (or through openings formed in) other types of items (i.e., other than electrical wires) and, in turn, (ii) secured to other types of flat surfaces (i.e., other than automotive panels) without departing from the spirit of the present invention.

Referring now back to Figs. 2-4, tie 111 can be used in the manner as referenced above by first wrapping strap 113 around the plurality of parallel wires to be coupled together. Second end 121 of strap 113 is then pulled tight, thereby securing the items together, and directed towards rear wall 133 of head 115.

Second end 121 of strap 113 is then fed through channel 143 through rear wall 133. Due to tapered front surface of locking tang 145, the continued insertion of strap 113 into channel 143 causes pawl 145 to deflect outward and pivot to the extent necessary so that first end 121 can exit channel 143 through front wall 131.

With the fastener such as a cable tie 111 formed into a closed loop around the desired articles, it is to be understood that any withdrawal force applied onto strap 113 causes one or more teeth 147 on pawl 145 to engage one or more corresponding teeth 129 on strap 113. As a result, tie 111 remains securely retained in its closed loop configuration around the designated bundle with a constant and reliable degree of tension.

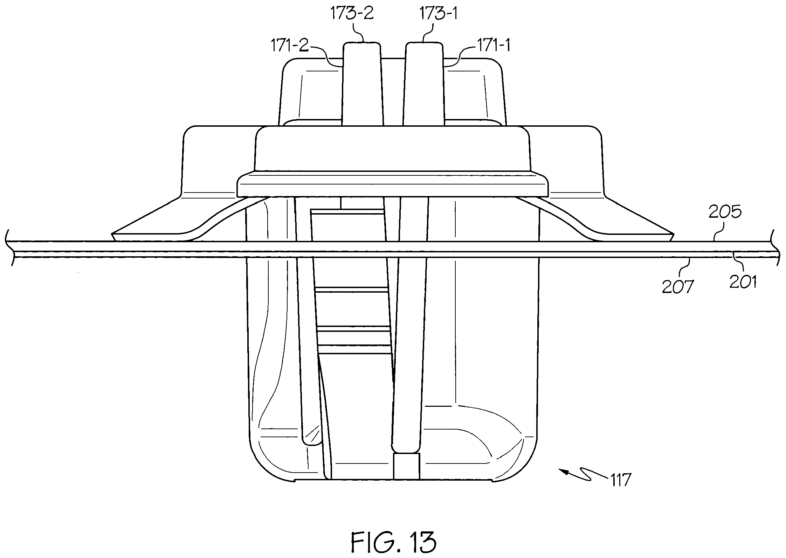

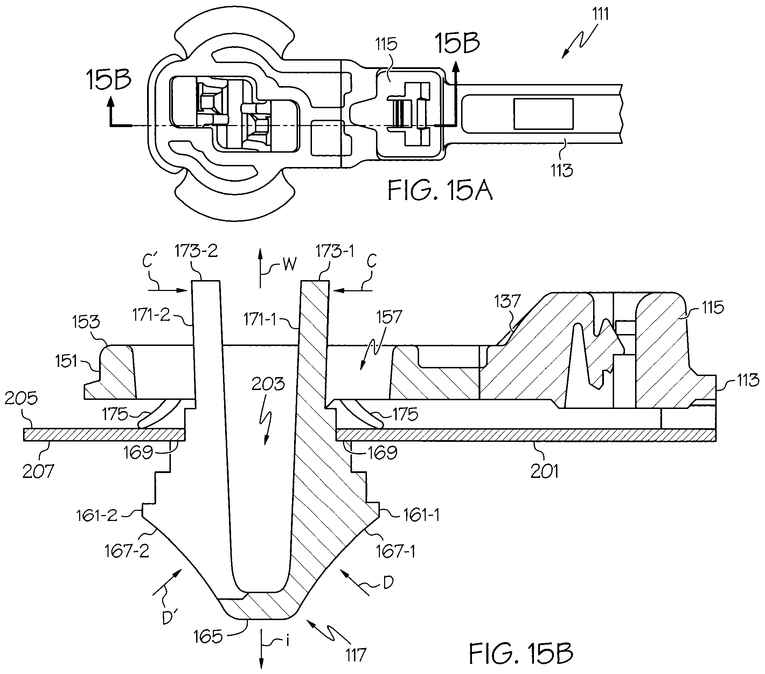

Referring now to Figs. 13, 14(a), 14(b), 15(a), and 15(b), there are shown a series of figures that are useful in understanding the principal features and advantages of cable tie 111 and, in particular, head117. Specifically, having bundled a plurality of wires in the manner set forth above, tie 111 can then be removably coupled to an automotive panel 201 by inserting aperture head r 117 through an opening 203 formed therein. Specifically, as seen most clearly in Fig. 15(b), cross-member, or point, 165 of aperture head117 is disposed in alignment with opening 203 and is inserted rearward in the direction from front surface 205 of panel 201 towards rear surface 207 of panel 201, as represented by arrow I.

As head117 is inserted rearward through opening 203, the portion of panel 201 that immediately defines opening 203 abuts against back surfaces 167-1 and 167-2. The rearward application of force applied to fastener 117 causes panel 201 to deflect retention wings 161 inward to the extent necessary so that wings 161 can at least partially penetrate through opening 203.

Once back surfaces 167 of wings 161 penetrate entirely through panel 201, wings 161 pivot outward, or expand, due to their resilient construction. Ultimately, the outward deflection of wings 161 causes a step 169 on each wing 161 to engage the portion of panel 201 that immediately defines opening 203, as shown, with the appropriate step 161 being based upon the size of opening 203. The continued outward force applied by each wing 161, due to its resilient construction, serves to securably retain fastener 117 coupled to panel 201, with spring tabs 175 applying an additional retentive force onto front surface 205 to stabilize fastener 117 in place within opening 203 in panel 201.

As noted above, a fastener such as a cable tie 111 is specifically designed to allow for the release of the aperture head 117 from either side of automotive panel 201. In other words, if access to one side of panel 201 is restricted, fastener 117 can still be released from the opposite side of panel 201.

For instance, if access to fastener such as cable tie 111 from the front of panel 201 is limited, fastener 117 can be disengaged from the rear of panel 201 by applying an inward compressive force on wings 161 through the manual depression of back surfaces 167-1 and 167-2, as represented by arrows D and D' respectively. While maintaining the compressive force, fastener 117 can be withdrawn, or extracted, from panel 201 by applying a frontward withdrawal force, as represented by arrow W.

Similarly, if access to fastener 111 from the rear of panel 201 is limited, fastener 117 can be disengaged from the front of panel 201 by applying an inward compressive force on release arms 171-1 and 171-2, as represented by arrows C and C', respectively. While maintaining the compressive force on release arms 171, fastener 117 can be withdrawn, or extracted, from panel 201 by applying a frontward withdrawal force, as represented by arrow W.

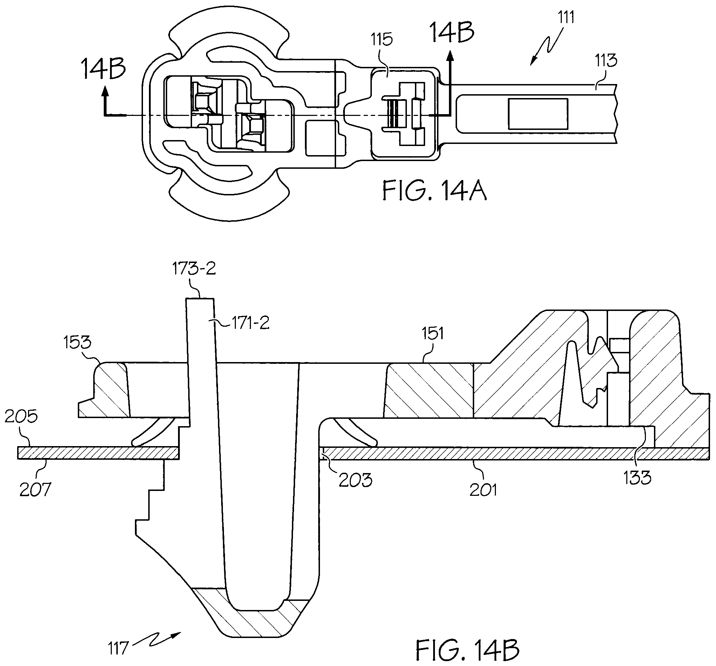

It is to be understood that because ends 173-1 and 173-2 of arms 171-1 and 171-2, respectively, extend through opening 157 in platform 151 beyond front surface 153, arms 171 are accessible for manipulation from the front of panel 201, as shown in Figs. 14(b) and 15(b). Furthermore, because platform 151 extends orthogonally out from outer end wall 137, strap 113 and head 115 do not block, or otherwise interfere with, access to arms 171.

As referenced briefly above, the resilient construction of aperture head117 allows for its reuse after being manually removed from panel 201. Accordingly, if a wire harness bundled by tie 111 is removed from automotive panel 201 for maintenance or other similar circumstances that require direct access to panel 201, fastener/cable tie 111 can be re-secured to panel 201 upon completion of the required task. By contrast, conventional ties often need to be severed to allow for separation of a wire harness from an automotive panel and, as such, are not similarly reusable.

## Claims

1. A fastener (111) comprising:
(a) a pawl (115, 145) shaped to include an elongated strap accepting channel (143), the pawl (115, 145) comprising a locking tang (145) which is disposed to project into the strap accepting channel (143);
(b) a strap (113) having a first end (119) and a second end (121), the first end (119) being formed onto the pawl (115), the strap (113) being dimensioned for insertion into the strap accepting channel (143) so the fastener (111) forms a closed loop, the strap (113) being adapted to be engaged by the locking tang (145) when the fastener (111) is formed into a closed loop; and
(c) an aperture head (117) formed onto at least one of the pawl (115, 145) and the strap (113), the aperture head comprising,
(i) a platform (151) shaped to define a transverse opening (157),
(ii) a support member (159) formed onto the platform (151), and
(iii) a first retention wing (161-1) pivotally coupled to the support member (159), wherein at least a portion of the first retention wing (161-1) extends through the transverse opening (157) in the platform (151),
**characterized in that** the platform (151) is formed onto and extends orthogonally out from an outer end wall (137) of the head (115).

2. The fastener as claimed in claim 1 wherein the fastener is constructed as a unitary plastic member.

3. The fastener as claimed in claim 1 wherein the aperture head (117) additionally comprises a second retention wing (161-2) that is pivotally coupled to the support member (159).

4. The fastener as claimed in claim 3 wherein the platform (151) includes a substantially flat front surface (153) and a substantially flat rear surface (155).

5. The fastener as claimed in claim 4 wherein the support member (159) comprises:
(a) a pair of parallel arms (163-1, 163-2) that are formed onto and extend orthogonally out from the rear surface (155) of the platform (151); and
(b) a cross-member (165) that extends transversely between the pair of parallel arms (163-1, 163-2).

6. The fastener as claimed in claim 5 wherein the first and second retention wings (161-1, 161-2) are hingedly connected to the cross-member (165) and extend outwardly therefrom in opposing directions.

7. The fastener as claimed in claim 6 wherein each of the first and second retention wings (161-1, 161-2) includes an elongated release arm (171-1, 171-2), at least a portion of the elongated release arm (171-1, 171-2) extending entirely through the transverse opening (157) in the platform (151).

8. The fastener as claimed in claim 7 wherein the elongated release arm (171-1, 171-2) is in the form of a generally rectangular bar.

9. The fastener as claimed in claim 7 wherein each of the first and second retention wings (161-1, 161-2) includes at least one step (169-1, 169-2) which is adapted to selectively engage a flat panel (201) when the insert fastener is inserted therethrough.

10. The fastener as claimed in claim 9 wherein each of the first and second retention wings (161-1, 161-2) include an externally exposed, depression surface (167-1, 167-2) for manual deflection.

11. The fastener as claimed in claim 7 wherein the pawl (115, 145) includes a front wall (131), a rear wall (133), an inner end wall (135), the outer end wall (137), and a pair of sidewalls (139, 141) that together define the elongated channel (143).

12. The fastener as claimed in at least one of the preceding claims wherein the strap (113) is in the form of an elongated flexible band comprising a front surface (123) and a bottom surface (125).

13. The fastener as claimed in claim 12 wherein a plurality of ratchet-shaped teeth (129) are formed onto the bottom surface of the strap (113), the plurality of ratchet-shaped teeth (129) being designed to be sequentially engaged by a locking mechanism (145) when the strap (113) is formed into a closed loop.

14. An aperture head comprising:
(a) a platform (151) shaped to define a transverse opening (157);
(b) a support member (159) formed onto the platform (151), the support member (159) comprising a pair of parallel arms (163-1, 163-2) that are formed onto and extend orthogonally out from a rear surface (155) of the platform (151) and a cross-member (165) that extends transversely between the pair of parallel arms (163-1, 163-2);
(c) a first retention wing (161-1) pivotally coupled to the support member (159), wherein at least a portion of the first retention wing (161-1) extends through the transverse opening (157) in the platform (151); and
(d) a second retention wing (161-2) that is pivotally coupled to the support member (159), each of the first and second retention wings (161-1, 161-2) having an original orientation and each of the first and second retention wings (161-1, 161-2) includes an elongated release arm (171-1, 171-2) with a free end (173-1, 173-2) and the free ends (173-1, 173-2) are positioned above a front surface (153) of the platform (151), at least a portion of the elongated release arm (171-1, 171-2) extending entirely through the transverse opening (157) in the platform (151);
wherein each of the first and second retention wings (161-1, 161-2) pivot inward upon receiving an inward compressive force, and upon removal of the inward compressive force each retention wing (161-1, 161-2) pivots back to the original orientation and the first retention wing (161-1) and the second retention wing (161-2) are laterally offset from one another.

15. The aperture head as claimed in claim 14 wherein the aperture head is constructed as a unitary plastic member.

16. The aperture head as claimed in claim 14 or 15 wherein the front surface (153) and the rear surface (155) of the platform (151) each are substantially flat.

17. The aperture head as claimed in at least one of the claims 14 to 16 wherein the first and second retention wings (161-1, 161-2) are hingedly connected to the cross-member (165) and extend outwardly therefrom in opposing.

## Patentansprüche

1. Befestigungselement (111), das umfasst:
(a) eine Klinke (115, 145), die derart geformt ist, dass sie einen langgestreckten Bandaufnahmekanal (143) umfasst, wobei die Klinke (115, 145) einen Verriegelungslappen (145) umfasst, der derart angeordnet ist, dass er in den Bandaufnahmekanal (143) vorsteht;
(b) ein Band (113) mit einem ersten Ende (119) und einem zweiten Ende (121), wobei das erste Ende (119) auf der Klinke (115) ausgebildet ist, wobei das Band (113) für den Einsatz in den Bandaufnahmekanal (143) bemessen ist, so dass das Befestigungselement (111) eine geschlossene Schleife bildet, wobei das Band (113) geeignet ist, von dem Verriegelungslappen (145) gegriffen zu werden, wenn das Verschlusselement (111) zu einer geschlossenen Schleife ausgebildet ist; und
(c) einen Mündungskopf (117), der auf der Klinke (115, 145) und/oder dem Band (113) ausgebildet ist, wobei der Mündungskopf umfasst:
(i) eine Plattform (151), die geformt ist, um eine Queröffnung (157) zu definieren,
(ii) ein Halteglied (159), das auf der Plattform (151) ausgebildet ist, und
(iii) einen ersten Halteflügel (161-1), der schwenkbar mit dem Halteglied (159) gekoppelt ist, wobei wenigstens ein Abschnitt des ersten Halteflügels (161-1) sich durch die Queröffnung (157) in der Plattform (151) erstreckt,
**dadurch gekennzeichnet, dass** die Plattform (151) auf einer äußeren Endwand (137) des Kopfs (115) ausgebildet ist und von dieser orthogonal herausragt.

2. Befestigungselement nach Anspruch 1, wobei das Befestigungselement als ein unitäres Kunststoffglied aufgebaut ist.

3. Befestigungselement nach Anspruch 1, wobei der Mündungskopf (117) zusätzlich einen zweiten Halteflügel (161-2) umfasst, der schwenkbar mit dem Haltelement (159) gekoppelt ist.

4. Befestigungselement nach Anspruch 3, wobei die Plattform (151) eine im Wesentlichen flache Vorderfläche (153) und eine im Wesentlichen flache hintere Fläche (155) umfasst.

5. Befestigungselement nach Anspruch 4, wobei das Halteglied (159) umfasst:
(a) ein Paar paralleler Arme (163-1, 163-2), die auf der hinteren Fläche (155) der Plattform (151) ausgebildet sind und von dieser orthogonal herausragen; und
(b) eine Querstrebe (165), die sich zwischen dem Paar paralleler Arme (163-1, 163-2) quer erstreckt.

6. Befestigungselement nach Anspruch 5, wobei die ersten und zweiten Halteflügel (161-1, 161-2) gelenkig mit der Querstrebe (165) verbunden sind und sich von dieser in entgegengesetzten Richtungen nach außen erstrecken.

7. Befestigungselement nach Anspruch 6, wobei jeder der ersten und zweiten Halteflügel (161-1, 161-2) einen langgestreckten Auslösearm (171-1, 171-2) umfasst, wobei wenigstens ein Abschnitt des langgestreckten Auslösearms (171-1, 171-2) sich vollständig durch die Queröffnung (157) in der Plattform (151) erstreckt.

8. Befestigungselement nach Anspruch 7, wobei der langgestreckte Auslösearm (171-1, 171-2) die Form eines im Allgemeinen rechteckigen Stabs hat.

9. Befestigungselement nach Anspruch 7, wobei jeder der ersten und zweiten Halteflügel (161-1, 161-2) wenigstens eine Stufe (169-1, 169-2) umfasst, die geeignet ist, um selektiv an einer flachen Platte (201) anzugreifen, wenn das Einsatzbefestigungselement durch sie eingesetzt wird.

10. Befestigungselement nach Anspruch 9, wobei jeder der ersten und zweiten Halteflügel (161-1, 161-2) eine nach außen freiliegende Vertiefungsfläche (167-1, 167-2) für die manuelle Auslenkung umfasst.

11. Befestigungselement nach Anspruch 7, wobei die Klinke (115, 145) eine Vorderwand (131), eine Rückwand (133), eine innere Endwand (135), die äußere Endwand (137) und ein Paar von Seitenwänden (139, 141) umfasst, die zusammen den langgestreckten Kanal (143) definieren.

12. Befestigungselement nach wenigstens einem der vorhergehenden Ansprüche, wobei das Band (113) die Form eines langgetreckten flexiblen Streifens hat, der eine Vorderfläche (123) und eine untere Fläche (125) umfasst.

13. Befestigungselement nach Anspruch 12, wobei eine Vielzahl von ratschenförmigen Zähnen (129) auf der Fläche des Bands (113) ausgebildet sind, wobei die Vielzahl von ratschenförmigen Zähnen (129) derart gestaltet sind, dass an ihnen nacheinander von einem Sperrmechanismus (145) angegriffen werden soll, wenn das Band (113) zu einer geschlossenen Schleife ausgebildet ist.

14. Mündungskopf, der umfasst:
(a) eine Plattform (151), die geformt ist, um eine Queröffnung (157) zu definieren,
(b) ein Halteglied (159), das auf der Plattform (151) ausgebildet ist, wobei das Halteglied (159) ein Paar paralleler Arme (163-1, 163-2), die auf einer hinteren Fläche (155) der Plattform (151) ausgebildet sind und von dieser orthogonal herausragen und eine Querstrebe (165), die sich zwischen dem Paar paralleler Arme (163-1, 163-2) quer erstreckt, umfasst;
(c) einen ersten Halteflügel (161-1), der schwenkbar mit dem Halteglied (159) gekoppelt ist, wobei wenigstens ein Abschnitt des ersten Halteflügels (161-1) sich durch die Queröffnung (157) in der Plattform (151) erstreckt; und
(d) einen zweiten Halteflügel (161-2), der schwenkbar mit dem Haltelement (159) gekoppelt ist, wobei jeder der ersten und zweiten Halteflügel (161-1, 161-2) eine ursprüngliche Orientierung hat, und jeder der ersten und zweiten Halteflügel (161-1, 161-2) einen langgestreckten Auslösearm (171-1, 171-2) mit einem freien Ende (173-1, 173-2) umfasst, und wobei die freien Enden (173-1, 173-2) über einer Vorderfläche (153) der Plattform (151) positioniert sind, wobei wenigstens ein Abschnitt des langgestreckten Auslösearms (171-1, 171-2) sich vollständig durch die Queröffnung (157) in der Plattform (151) erstreckt;
wobei jeder der ersten und zweiten Halteflügel (161-1, 161-2) bei Aufnahme einer einwärts gerichteten Kompressionskraft einwärts schwenkt, und wobei jeder Halteflügel (161-1, 161-2) bei Entfernung der einwärtsgerichteten Kompressionskraft zurück in die ursprüngliche Orientierung schwenkt, und der erste Halteflügel (161-1) und der zweite Halteflügel (161-2) seitlich gegeneinander versetzt sind.

15. Mündungskopf nach Anspruch 14, wobei der Mündungskopf als ein unitäres Kunststoffglied aufgebaut ist.

16. Mündungskopf nach Anspruch 14 oder 15, wobei Vorderfläche (153) und die hintere Fläche der Plattform (151) im Wesentlichen flach sind.

17. Mündungskopf nach wenigstens einem der Ansprüche 14 bis 16, wobei die ersten und zweiten Halteflügel (161-1, 161-2) gelenkig mit der Querstrebe (165) verbunden sind und sich von dieser in entgegengesetzt nach außen erstrecken.

## Revendications

1. Dispositif de fixation (111) comportant :
(a) un cliquet (115, 145) mis en forme pour inclure un canal allongé acceptant une sangle (143), le cliquet (115, 145) comportant une languette de verrouillage (145) qui est disposée pour faire saillie dans le canal acceptant une sangle (143) ;
(b)une sangle (113) ayant une première extrémité (119) et une seconde extrémité (121), la première extrémité (119) étant constituée sur le cliquet (115), la sangle (113) étant dimensionnée pour une insertion dans le canal acceptant une sangle (143), de sorte que le dispositif de fixation (111) constitue une boucle fermée, la sangle (113) étant apte à être mise en prise par la languette de verrouillage (145) lorsque le dispositif de fixation (111) est constitué en une boucle fermée ; et
(c) une tête d'ouverture (117) constituée sur au moins un des cliquets (115, 145) et la sangle (113), la tête d'ouverture comportant
(i) une plate-forme (151) mise en forme pour définir une ouverture transversale (157),
(ii) un élément de support (159) constitué sur la plate-forme (151) et
(iii) une première branche de maintien (161-1) accouplée pivotante à l'élément de support (159), dans lequel au moins une portion de la première branche de maintien (161-1) s'étend à travers l'ouverture transversale (157) dans la plate-forme (151),
**caractérisé en ce que** la plate-forme (151) est constituée sur une paroi d'extrémité extérieure (137) de la tête (115) et s'étend au plan orthogonal depuis celle-ci.

2. Dispositif de fixation selon la revendication 1, dans lequel le dispositif de fixation est conçu en tant qu'un élément en plastique d'un seul tenant.

3. Dispositif de fixation selon la revendication 1, dans lequel la tête d'ouverture (117) comporte de plus une seconde branche de maintien (161-2) qui est accouplée pivotante à l'élément de support (159).

4. Dispositif de fixation selon la revendication 3, dans lequel la plate-forme (151) inclut une surface avant (153) sensiblement plate et une surface arrière (155) sensiblement plate.

5. Dispositif de fixation selon la revendication 4, dans lequel l'élément de support (159) comporte :
(a) une paire de bras parallèles (163-1, 163-2) qui sont constitués sur la surface arrière (155) de la plate-forme (151) et s'étendent au plan orthogonal depuis celle-ci ; et
(b) une traverse (165) qui s'étend au plan transversal entre la paire de bras parallèles (163-1, 163-2).

6. Dispositif de fixation selon la revendication 5, dans lequel les première et seconde branches de maintien (161-1, 161-2) sont raccordées de manière articulée à la traverse (165) et s'étendent vers l'extérieur depuis celle-ci dans des directions opposées.

7. Dispositif de fixation selon la revendication 6, dans lequel chacune des première et seconde branches de maintien (161-1, 161-2) inclut un bras de débrayage allongé (171-1, 171-2), au moins une portion du bras de débrayage allongé (171-1, 171-2) s'étendant totalement à travers l'ouverture transversale (157) dans la plate-forme (151).

8. Dispositif de fixation selon la revendication 7, dans lequel le bras de débrayage allongé (171-1, 171-2) a la forme d'une barre généralement rectangulaire.

9. Dispositif de fixation selon la revendication 7, dans lequel chacune des première et seconde branches de maintien (161-1, 161-2) inclut au moins un cran (169-1, 169-2) qui est apte à venir en prise de façon sélective avec un panneau plat (201) lorsque le dispositif de fixation à pièce rapportée est inséré à travers lui.

10. Dispositif de fixation selon la revendication 9, dans lequel chacune des première et seconde branches de maintien (161-1, 161-2) inclut une surface en creux (167-1, 167-2), apparente à l'extérieur, pour une déflexion manuelle.

11. Dispositif de fixation selon la revendication 7, dans lequel le cliquet (115, 145) inclut une paroi avant (131), une paroi arrière (133), une paroi d'extrémité intérieure (135), la paroi d'extrémité extérieure (137) et une paire de parois latérales (139, 141) qui délimitent ensemble le canal allongé (143).

12. Dispositif de fixation selon au moins l'une des revendications qui précèdent, dans lequel la sangle (113) a la forme d'une bande flexible allongée comportant une surface avant (123) et une surface de fond (125).

13. Dispositif de fixation selon la revendication 12, dans lequel une pluralité de dents en forme de rochet (129) sont constituées sur la surface de fond de la sangle (113), la pluralité de dents en forme de rochet (129) étant conçues pour être mises en prise de façon séquentielle par un mécanisme de verrouillage (145) lorsque la sangle (113) est constituée en une boucle fermée.

14. Tête d'ouverture comportant :
(a) une plate-forme (151) mise en forme pour définir une ouverture transversale (157) ;
(b) un élément de support (159) constitué sur la plate-forme (151), l'élément de support (159) comportant une paire de bras parallèles (163-1, 163-2) qui sont constitués sur une surface arrière (155) de la plate-forme (151) et s'étendent au plan orthogonal depuis celle-ci et une traverse (165) qui s'étend au plan transversal entre la paire de bras parallèles (163-1, 163-2) ;
(c) une première branche de maintien (161-1) accouplée pivotante à l'élément de support (159), dans laquelle au moins une portion de la première branche de maintien (161-1) s'étend à travers l'ouverture transversale (157) dans la plate-forme (151) ; et
(d) une seconde branche de maintien (161-2) qui est accouplée pivotante à l'élément de support (159), chacune des première et seconde branches de maintien (161-1, 161-2) ayant une orientation initiale et chacune des première et seconde branches de maintien (161-1, 161-2) inclut un bras de débrayage allongé (171-1, 171-2) avec une extrémité libre (173-1, 173-2) et les extrémités libres (173-1, 173-2) sont positionnées au-dessus d'une surface avant (153) de la plate-forme (151), au moins une portion du bras de débrayage allongé (171-1, 171-2) s'étendant totalement à travers l'ouverture transversale (157) dans la plate-forme (151) ;
dans laquelle chacune des première et seconde branches de maintien (161-1, 161-2) pivote vers l'intérieur après avoir reçu une force de compression vers l'intérieur et, après le retrait de la force de compression vers l'intérieur, chaque branche de maintien (161-1, 161-2) pivote de nouveau vers l'orientation initiale et la première branche de maintien (161-1) et la seconde branche de maintien (161-2) sont décalées latéralement l'une par rapport à l'autre.

15. Tête d'ouverture selon la revendication 14, dans laquelle la tête d'ouverture est conçue en tant qu'un élément en plastique d'un seul tenant.

16. Tête d'ouverture selon la revendication 14 ou 15, dans laquelle la surface avant (153) et la surface arrière (155) de la plate-forme (151) sont chacune sensiblement plates.

17. Tête d'ouverture selon au moins l'une des revendications 14 à 16, dans laquelle les première et seconde branches de maintien (161-1, 161-2) sont raccordées de manière articulée à la traverse (165) et s'étendent vers l'extérieur depuis celui-ci dans des directions opposées.
